# EUROPEAN PATENT SPECIFICATION

(11) **EP 2 991 059 B1**
(45) Date of publication and mention of the grant of the patent: **25.12.2019**
(21) Application number: 13882944.5
(22) Date of filing: 24.10.2013
(51) Int. Cl.: G09B 29/10, G01C 21/32, G08G 1/0968

(54) **METHOD AND DEVICE FOR DETERMINING ELECTRONIC MAP**
VERFAHREN UND VORRICHTUNG ZUM BESTIMMEN EINER ELEKTRONISCHEN KARTE
PROCEDE ET DISPOSITIF POUR DETERMINER UNE CARTE ELECTRONIQUE

(30) Priority: 23.04.2013 CN 201310143793
(43) Date of publication of application: 02.03.2016
(73) Proprietor: Xiaomi Inc., Beijing 100085 (CN)
(72) Inventor: REN, Yuan, Beijing 100085 (CN); YAO, Peiling, Beijing 100085 (CN); XU, Darui, Beijing 100085 (CN)
(74) Representative: Perrot, Emilie
(86) International application number: PCT/CN2013/085860
(87) International publication number: WO 2014/173094

(56) References cited:
- CN-A- 101 158 586
- CN-A- 101 311 678
- CN-A- 102 735 246
- CN-A- 102 735 246
- CN-A- 103 247 226
- JP-A- S63 151 879
- JP-A- S63 265 112
- TW-A- 201 024 667
- US-A1- 2009 117 921

## Description

### TECHNICAL FIELD

The present invention relates to the field of information processing, and, more particularly, to a method and a device for determining an electronic map.

### BACKGROUND

With the high-speed development of internet technology, the contents of web pages have been providing more and more information, and usages of electronic maps have been tending to be more likely daily affairs of people. Today's electronic maps may be used not only to search various locations, but also to inquire travel routes, which is for example, when travelling from a position A to a position B, how to take buses and how to make a transfer, or which route should be selected for car drivers. In addition, electronic maps may be also used for searching and posting information. For example, when having searched one restaurant on an electronic map, besides the geographic location of the restaurant that may be possibly found on the electronic map, other information such as contact, phone number, goods and services to be provided of the restaurant may also be found thereon.

In addition to the above several functions, different electronic maps may have different functions, as shown in table 1, wherein, "√" represents that the electronic map has the corresponding function, and "-" represents that the electronic map does not have the corresponding function.

**Table 1:**

| function\electronic map | Map ABC | Baidu Map | 51 Map | Google Map | 365 Map | Bing Map | MapBar | notes |
|---|---|---|---|---|---|---|---|---|
| mark interface | √ | √ | √ | √ | - | √ | √ | customizing location and content on the map |
| search function | √ | √ | √ | √ | √ | √ | √ (charged) | including peripheral inquiring |
| navigation function | √ (under Ajax) | √ | √ (charged) | √ (main road) | √ | √ (Highways Only) | √ (charged) | self-drive route inquiring |
| bus inquire | √ (under Ajax) | √ | √ (charged) | √ | √ | - | √ (charged) | including bus transfer inquiring, bus route inquiring |
| GPS coordinate mark | √(charged ) | √ | - | √ | - | - | - | resolving and displaying coordinate on the map with GPS ID |
| traffic condition function | - | √ | √ (charged) | √ | - | - | - | real time traffic condition, using colors of traffic lights to represent flux and jam situations |
| address resolution and reverse address resolution | √ | √ (limited number of times) | √ | √ (limited number of times) | √ (charge d) | √ (limited number of times) | √ (charged) | transforming address into longitude and latitude coordinate information and coordinate information into address information of city or the like |
| the local city function | √ | √ | √ | √ | √ | √ | √(charged) | automatically positioning visitor's city with IP |
| satellite pictures function | - | - | - | √ | - | √ | - | providing calibrated satellite pictures and mixed display |
| Flash map | √ | √ | √ | √ | √ | √ | √ | |

From the contents of the table 1, it can be seen that electronic maps having different application programming interfaces (API) may have different functions. In addition, the electronic maps may have their respective functions to be limited by regions. For example, in Google map, data related to the electronic maps of China region is provided by Map ABC, which has different API from Google map, namely, the electronic maps of China region in Google map have functions different from the electronic maps of other regions. In another example, both the Microsoft Virtual Earth API based on Virtual Earth and the Yahoo Maps API based on Yahoo Maps have very rich display effects, but until now neither of them supports the development of the electronic maps of China region.

At present, terminals with electronic map function are usually bound with a single electronic map to provide services for users, the services able to be provided thereby may be limited by the functions of the electronic map and the applicable regions, thus having very poor flexibility.

Document US 2009/0117921 describes a system and method for creation and deployment of personalized dynamic web services to access location information on individuals and objects. Document CN 102735246 describes a multi-map navigation system.

### SUMMARY

The embodiments of the present invention provide a method and a device for determining an electronic map, which are used to solve the problem in the prior art of providing a single electronic map and relatively poor flexibility.

In one aspect, the present invention has following technical solutions.

A method for determining an electronic map, executed by a terminal with electronic map functions, comprising:
obtaining electronic map filtering information after receiving an electronic map start instruction inputted by a user, wherein the electronic map filtering information is current geographic location information; and
determining at least one electronic map matching with the electronic map filtering information from a plurality of preset electronic maps, wherein the plurality of preset electronic maps have different application programming interfaces and different functions, and wherein the step (12) of determining at least one electronic map matching with the electronic map filtering information from the plurality of preset electronic maps comprises:
   judging (23, 32) whether the current geographic location information is identical to pre-stored geographic location information, the pre-stored geographic location information being geographic location information previously obtained when using the electronic map function;
   when judging that the current geographic location information is different from the stored geographic location information, determining (24, 33) at least one electronic map corresponding to the current geographic location information according to a preset corresponding relationship between geographic location information and electronic maps;
   when judging that the current geographic location information is identical to the stored geographic location information, determining (25, 34) an electronic map previously determined with respect to the stored geographic location information as the electronic map matching with the current geographic location information and as the selected electronic map
when a plurality of electronic maps are determined to match with the electronic map filtering information, the method further comprises:
   obtaining (36) a user's requirement information, wherein the requirement information includes self-drive route inquiring, bus route inquiring, traffic condition inquiring, GPS coordinate inquiring, or satellite picture inquiring;
   determining (36) an electronic map function corresponding to the requirement information according to the requirement information; and
   determining as the selected electronic map an electronic map having the electronic map function corresponding to the requirement information from the more than one determined electronic maps according to respective electronic map functions of the determined electronic maps, loading and displaying the selected electronic map.

A device for determining an electronic map, comprising:
an electronic map filtering information obtaining unit configured to obtain electronic map filtering information after receiving an electronic map start instruction inputted by a user, wherein the electronic map filtering information is current geographic location information; and
a first electronic map determining unit configured to determine at least one electronic map matching with the electronic map filtering information from a plurality of preset electronic maps,wherein the plurality of preset electronic maps have different application programming interfaces and different functions, and wherein the first electronic map determining unit (42) comprises:
   a judging module (421) configured to judge whether the current geographic location information is identical to pre-stored geographic location information, the pre-stored geographic location information being geographic location information previously obtained when using the electronic map function;
   a first determining module (422) configured to determine an electronic map corresponding to the current geographic location information according to a preset corresponding relationship between geographic location information and electronic maps when the judging module judges that the current geographic location information is different from the stored geographic location information; and
   a second determining module (423) configured to determine an electronic map previously determined with respect to the stored geographic location information as an electronic map matching with the current geographic location information when the judging module judges that the current geographic location information is identical to the stored geographic location information,
wherein when there is more than one electronic map being determined to match with the electronic map filtering information by the first electronic map determining unit (42), the device further comprises:
   a requirement information obtaining unit (43) configured to obtain a user's requirement information, wherein the requirement information includes self-drive route inquiring, bus route inquiring, traffic condition inquiring, GPS coordinate inquiring, or satellite picture inquiring;
   an electronic map function determining unit (44) configured to determine an electronic map function corresponding to the requirement information according to the requirement information obtained by the requirement information obtaining unit; and
   a second electronic map determining unit (45) configured to determine as the selected electronic map an electronic map having the function corresponding to the requirement information from the more than one determined electronic maps according to respective electronic map functions of the determined electronic maps,
wherein the requirement information includes self-drive route inquiring, bus route inquiring, traffic condition inquiring, GPS coordinate inquiring, or satellite picture inquiring,
   a second electronic map displaying unit (49) configured to load and display the electronic map.

In another aspect, there is provided a computer program product stored on a computer usable medium, comprising computer-readable program means for causing a device to implement the method according to the above aspect.

The embodiments of the present invention have following advantages.

In the embodiments of the present invention, after receiving a start instruction of a navigation electronic map inputted by a user, an electronic map filtering information may be obtained, and one or more electronic maps matching with the electronic map filtering information may be determined from a plurality of preset electronic maps, so that an electronic map which best matches with the current electronic map filtering information may be selected automatically and freely as required when a user is in needs for services of an electronic map, instead of using a single electronic map with limitations of regions and functions, thereby avoiding the problem in the prior art of providing a single electronic map and relatively poor flexibility.

### BRIEF DESCRIPTION OF THE DRAWINGS

Fig. 1 is a main exemplary flow chart showing a method for determining an electronic map according to an embodiment of the present invention;
Fig. 2 is an exemplary flow chart showing a method for determining an electronic map;
Fig. 3 is an exemplary flow chart showing a method for determining an electronic map according to embodiment 1 of the present invention;
Fig. 4 is a diagram showing the structure of a device for determining an electronic map according to embodiment 2 of the present invention.

The specific embodiments of the present invention have been illustrated in conjunction with the accompanying drawings, and will be further described in detail hereinafter. The accompanying drawings and the texts are not used to limit the scope conceived by the present invention, but rather to explain concepts of the present invention for those skilled in the art by referring to those specific embodiments.

### DETAILED DESCRIPTION

In order to solve the problem in the prior art of providing a single electronic map and relatively poor flexibility, the embodiments of the present invention provide an aspect for determining an electronic map. In the present aspect, after receiving a electronic map start instruction inputted by a user, a filtering information for the electronic map may be obtained, and one or more electronic maps matching with the electronic map filtering information may be determined out from a plurality of preset electronic maps, so that an electronic map which best matches with the current electronic map filtering information can be selected automatically and flexibly as required when a user is in need for service of an electronic map, instead of using a single electronic map with limitations of regions and functions, thereby avoiding the problem in the prior art of providing a single electronic map and relatively poor flexibility.

Hereafter the embodiments of the present invention will be described in detail in conjunction with respective accompanying drawings on the implementation principles, detailed embodiments and corresponding beneficial effects able to be achieved.

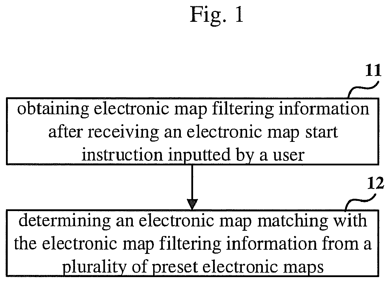

As shown in Fig. 1, which is a main exemplary flow chart showing a method for determining an electronic map according to an embodiment of the present invention, the method includes:
obtaining electronic map filtering information after receiving an electronic map start instruction inputted by a user (step 11);

The electronic map filtering information may be geographic location information, the geographic location information may be either a certain geographic location information inputted by the user, or a geographic location information of the user's current location obtained automatically.

The geographic location information of the user's current location may be determined by one or more of the following ways:
obtaining the user's current geographic location information from an IP address; or
obtaining the user's current geographic location information from a GPS positioning; or
obtaining the user's current geographic location information from a GPRS positioning; or
obtaining the user's current geographic location information through a geographic location application program interface embedded in a browser.

In step 12, an electronic map which matches with the obtained electronic map filtering information is determined from a plurality of preset electronic maps.

When the electronic map filtering information is current geographic location information, the step may include specifically:
according to a preset corresponding relationship between geographic location information and electronic maps, determining an electronic map corresponding to the geographic location information from the plurality of preset electronic maps, the electronic map determined herein may being one, or may being plural.

When the electronic map is determined, it may be directly loaded and displayed, or marks of the determined electronic maps may be displayed and an electronic map represented by a mark corresponding to the user's selection instruction may be loaded and displayed according to the selection instruction inputted by the user.

In this step, whether the obtained current geographic location information is identical to pre-stored geographic location information may be further judged, wherein the pre-stored geographic location information may be geographic location information previously obtained when using the electronic map function. When the current geographic location information is judged as being identical to the stored geographic location information, an electronic map previously determined with respect to the stored geographic location information may be determined as the electronic map matching with the current geographic location information, so the electronic map previously used may be used again. Since generally the electronic map previously used may still be stored in cache while other electronic maps need to be obtained via network, direct use of the electronic map previously used may not only reduce the arithmetic procedures for judgment, but also reduce the time for loading the electronic map.

In the embodiment of the present invention, after receiving an electronic map start instruction inputted by the user, the electronic map filtering information may be obtained, and one or more electronic maps matching with the electronic map filtering information may be determined out from the plurality of preset electronic maps, so that an electronic map which best matches with the current electronic map filtering information may be selected automatically and flexibly as required when a user is in need for service of an electronic map, instead of using a single electronic map with limitations of regions and functions, thereby avoiding the problem in the prior art of providing a single electronic map and relatively poor flexibility.

Based on the above principles, two embodiments of the present invention will be described in detail to illustrate and explain the main implementation principles of the method in the present invention.

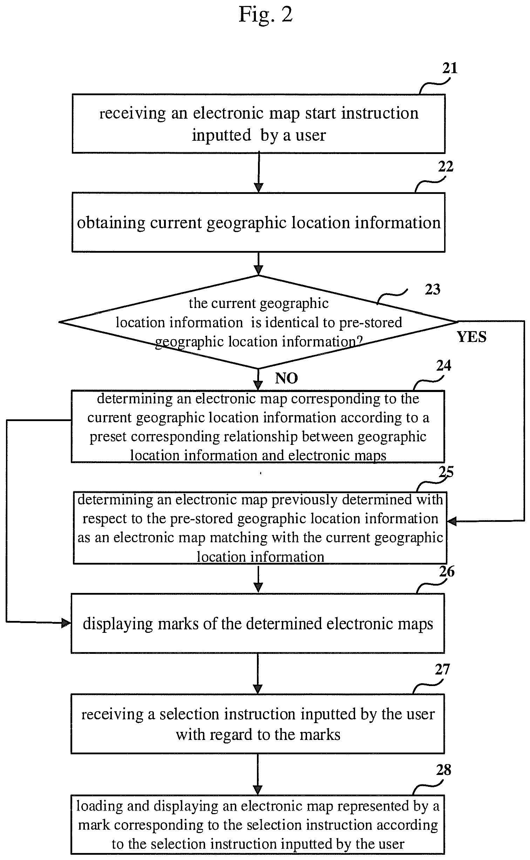

Comparative example 1 As shown in Fig. 2, which is a detailed flow chart showing a method for determining an electronic map, the method may be executed by a terminal with electronic map functions, and includes:
receiving an electronic map start instruction inputted by a user (step 21);
obtaining current geographic location information according to one or more of the following preset ways (step 22);

The preset ways may include:
obtaining current geographic location information from an IP address of the terminal;
obtaining current geographic location information through a GPS positioning function of the terminal;
obtaining current geographic location information through a GPRS positioning function of the terminal; or
obtaining the current geographic location information through a geographic location application program interface embedded in a browser of the terminal;

In step 23, whether the obtained current geographic location information is identical to pre-stored geographic location information is judged, if not, step 24 is executed, otherwise step 25 is executed.

In step 24, an electronic map corresponding to the obtained current geographic location information is determined according to a preset corresponding relationship between geographic location information and electronic maps;
In step 25, an electronic map previously determined with respect to the stored geographic location information as an electronic map matching with the obtained current geographic location information is determined;
In step 26, marks of the determined electronic maps are displayed;
In step 27, a selection instruction inputted by the user with regard to the marks is received; and
Step 28, an electronic map represented by a mark corresponding to the selection instruction is loaded and displayed according to the selection instruction inputted by the user.

In the comparative example, geographic location information may be obtained after receiving an electronic map start instruction inputted by a user, then an electronic map matching with the geographic location information may be determined from a plurality of preset electronic maps, marks of the determined electronic maps may be displayed, and a corresponding electronic map may be loaded according to the selection instruction inputted by the user. Therefore, there are many optional electronic maps able to be selected in this aspect. Not only the most suitable electronic map may be selected according to address and location information with flexibility, but also the determined result can be fed back to the user and the optimal electronic map can be loaded based on the user's selection, thereby avoiding the problem in the prior art of providing a single electronic map and relatively poor flexibility.

### Embodiment 1

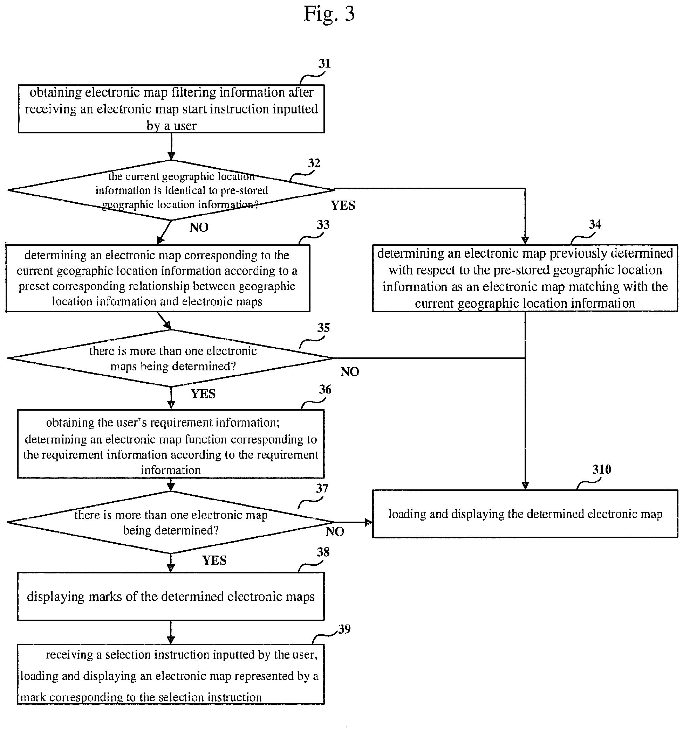

As shown in Fig. 3, which is a detailed flow chart showing a method for determining an electronic map according to the embodiment 1 of the present invention, the method may be executed by a terminal with electronic map functions, and includes:
obtaining current geographic location information after receiving an electronic map start instruction inputted by a user (step 31);
judging whether the obtained current geographic location information is identical to pre-stored geographic location information (step 32). If not, step 33 is executed, otherwise step 34 is executed;

In step 33, an electronic map corresponding to the obtained current geographic location information is determined according to a preset corresponding relationship between geographic location information and electronic maps, and step 35 is executed;
In step 34, an electronic map previously determined with respect to the stored geographic location information as an electronic map matching with the obtained current geographic location information is determined, and step 310 is executed;
In step 35, whether there are a plurality of electronic maps being determined is judged, if so, step 36 is executed, otherwise step 310 is executed; and
In step 36, the user's requirement information is obtained, and an electronic map matching with the requirement information is determined according to the requirement information.

In this step, an electronic map function corresponding to the requirement information according to user's requirement information is firstly determined, and then an electronic map having the electronic map function corresponding to the obtained requirement information is determined from the plurality of determined electronic maps according to respective electronic map functions of the determined electronic maps, wherein the requirement information may include: self-drive route inquiring, bus route inquiring, traffic condition inquiring, GPS coordinate inquiring, satellite picture inquiring and so on.

For example, assuming that the electronic maps determined in step 33 include seven electronic maps shown in table 1: Map ABC, Baidu map, 51 map, Google map, 365 map, Bing Map and MapBar, then,
when the requirement information inputted by the user is a self-drive route inquiring, the electronic map function corresponding to the self-drive route inquiring is determined as a navigation function, thus the electronic map matching with the user's requirement information is an electronic map with the navigation function, that is, Map ABC, Baidu map, 51 map, Google map, 365 map, Bing Map, and MapBar;
when the requirement information inputted by the user is a bus route inquiring, the electronic map function corresponding to the bus route inquiring is determined as a bus inquiring, thus the electronic map matching with the user's requirement information is an electronic map with a bus inquire function, that is, Map ABC, Baidu map, 51 map, Google map, 365 map, and MapBar;
when the requirement information inputted by the user is traffic condition inquiring, the electronic map function corresponding to the traffic condition inquiring is determined as a traffic condition function, thus the electronic map matching with the user's requirement information is an electronic map with traffic condition function, that is, Baidu map, 51 map and Google map;
when the requirement information inputted by the user is GPS coordinate inquiring, the electronic map function corresponding to the GPS coordinate inquiring is determined as a GPS coordinate mark function, thus the electronic map matching with the user's requirement information is an electronic map with GPS coordinate mark function, that is, Map ABC; and
when the requirement information inputted by the user is satellite picture inquiring, the electronic map function corresponding to the satellite picture inquiring is determined as a satellite pictures function, thus the electronic map matching with the user's requirement information is an electronic map with satellite pictures function, that is, Google map and Bing Map.

In addition, based on a plurality of received requirement information inputted by the user, the electronic map corresponding thereto may be determined. Still taking the seven electronic maps shown in table 1 as examples, when the user's requirement information includes traffic condition inquiring and satellite picture inquiring, the electronic map determined as matching thereto is Google map.

In step 37, whether there are a plurality of electronic maps being determined is judged, if so, step 38 is executed, otherwise step 310 is executed;

In step 38, marks of the plurality of determined electronic maps is displayed;

In step 39, a selection instruction inputted by the user is received, an electronic map represented by a mark corresponding to the selection instruction is loaded and displayed, and

In step 310, the determined electronic maps are loaded and displayed.

In the embodiment of the present invention, after receiving an electronic map start instruction inputted by a user, geographic location information may be obtained, and the electronic map matching with the geographic location information may be determined from the plurality of preset electronic maps, then the electronic map matching with requirement information may be further determined from the determined electronic maps according to the user's requirement information, and finally the corresponding electronic map may be loaded according to the selection instruction inputted by the user, therefore there are many optional electronic maps able to be selected in this aspect. Not only the most suitable electronic map may be selected with flexibility according to address and location information and the user's requirement information, but also the determined result may be fed back to the user and the optimal electronic map may be loaded based on the user's selection, thereby avoiding the problem in the prior art of providing a single electronic map and relatively poor flexibility.

### Embodiment 2

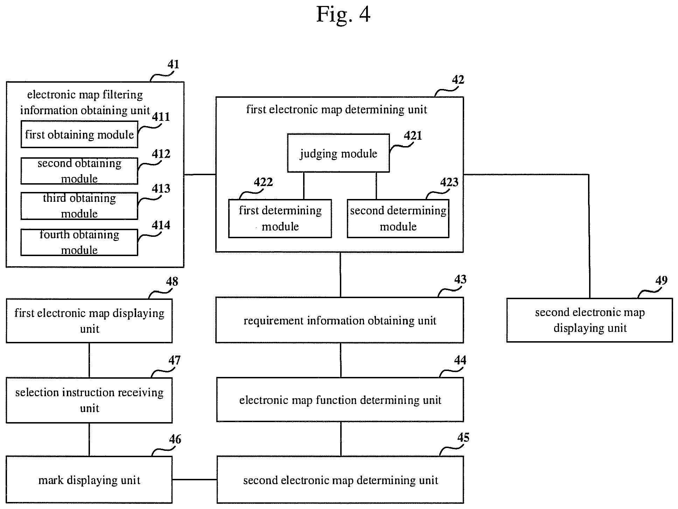

Based on the above method for determining an electronic map, the embodiment 2 of the present invention provides a device for determining an electronic map, which may be any kind of terminal with electronic map functions, as shown in Fig. 4, which is a diagram showing the structure of the device, which includes:
an electronic map filtering information obtain unit 41 configured to obtain electronic map filtering information after receiving an electronic map start instruction inputted by a user; and
a first electronic map determining unit 42 configured to determine an electronic map matching with the electronic map filtering information obtained by the electronic map filtering information obtain unit 41 from a plurality of preset electronic maps.

When the electronic map filtering information obtained by the electronic map filtering information obtain unit 41 is current geographic location information, the first electronic map determining unit 42 includes:
a judging module 421 configured to judge whether the obtained current geographic location information is identical to pre-stored geographic location information;
a first determining module 422 configured to determine an electronic map corresponding to the obtained current geographic location information according to a preset corresponding relationship between geographic location information and electronic maps, when the judging module 421 judges that the current geographic location information is different from the stored geographic location information; and
a second determining module 423 configured to determine an electronic map previously determined with respect to the stored geographic location information as an electronic map matching with the obtained current geographic location information, when the judging module 421 judges the that the current geographic location information is identical to the stored geographic location information.

When the electronic map filtering information obtained by the electronic map filtering information obtain unit 41 is geographic location information, the electronic map filtering information obtain unit 41 may include:
a first obtaining module 411 configured to obtain the geographic location information from an IP address; or
a second obtaining module 412 configured to obtain the geographic location information from a GPS positioning; or
a third obtaining module 413 configured to obtain the geographic location information from a GPRS positioning; or
a fourth obtaining module 414 configured to obtain the geographic location information through a geographic location application program interface embedded in a browser.

If there is more than one electronic map being determined by the first electronic map determining unit 42, the device further includes
a requirement information obtaining unit 43 configured to obtain the user's requirement information;
an electronic map function determining unit 44 configured to determine an electronic map function corresponding to the requirement information according to the requirement information obtained by the requirement information obtaining unit 43; and
a second electronic map determining unit 45 configured to determine an electronic map with the electronic map function corresponding to the requirement information from a plurality of determined electronic maps according to electronic map function of respective electronic map determined by the electronic map function determining unit 44.

The device may further include:
a mark displaying unit 46 configured to display marks of the electronic maps determined by the first electronic map determining unit 42;
a selection instruction receiving unit 47 configured to receive a selection instruction inputted by the user with regard to the marks displayed by the mark displaying unit 46; and
a first electronic map displaying unit 48 configured to load and display an electronic map represented by a mark corresponding to the selection instruction according to the selection instruction received by the selection instruction receiving unit 47.

The device further includes a second electronic map displaying unit 49 configured to load and display the electronic map determined by the first electronic map determining unit 42.

In the device for determining an electronic map provided in the embodiments of the present invention, after receiving an electronic map start instruction inputted by a user, geographic location information may be obtained, and an electronic map matching with the geographic location information may be determined out from the plurality of preset electronic maps, then the electronic map matching with requirement information may be further determined out from the determined electronic maps based on the user's requirement information, and finally the corresponding electronic map may be loaded according to the selection instruction inputted by the user, therefore there are many optional electronic maps able to be selected in this aspect. Not only the most suitable electronic map can be selected according to address and location information and the user's requirement information with flexibility, but also the determined result can be fed back to the user and the optimal electronic map can be loaded based on the user's selection, thereby avoiding the problem in the prior art of providing a single electronic map and relatively poor flexibility.

It should be understood for those skilled in the art that, the embodiments of the present invention may be provided as a method, a system, or a computer program product. In this way, the present invention may be in the form of hardware-only embodiments, software-only embodiments, or embodiments in combination of software and hardware. Moreover, the present invention may be in the form of computer program products to be carried on one or more computer usable storage medium (including but not limited to disc memory, CD-ROM, optical memory and the like) including computer usable program codes therein.

The present invention is described with referring to the flow charts and/or block diagrams of the method, the device (system), and the computer program products according to the embodiments of the present invention. It should be understood that the computer program instructions may be used to implement each flow process and/or each block in the flow charts and/or block diagrams, and the combinations of the flow process and/or block in the flow charts and/or block diagrams. The computer program instructions may be provided to a general computer, a dedicated computer, an embedded processor or processors of other programmable data process devices to produce a machine, so that the instructions executed by the computers or the processors of other programmable data process devices can produce a device for achieving the functions prescribed by one or more procedures in the flow charts and/or one or more blocks in the block diagrams.

Those computer program instructions may be stored in a computer readable memory able to guide the computer or other programmable data process devices to work in a specific way, so that the instructions stored in the computer readable memory may produce a manufactured product including an instructing device for achieving the functions prescribed by one or more procedures in the flow charts and/or one or more blocks in the block diagrams.

Those computer program instructions may also be loaded in a computer or other programmable data process devices, such that the computer or other programmable devices may execute a series of operation steps to produce processes achieved by the computer, thereby the instructions executed on the computers or other programmable devices can produce steps for achieving the functions prescribed by one or more procedures in the flow charts and/or one or more blocks in the block diagrams.

## Claims

1. A method for determining an electronic map, executed by a terminal with electronic map functions, the method comprising:
obtaining (11, 22, 32) electronic map filtering information after receiving (21, 31) an electronic map start instruction inputted by a user, wherein the electronic map filtering information is current geographic location information; and
determining (12) at least one electronic map matching with the electronic map filtering information from a plurality of preset electronic maps, wherein the plurality of preset electronic maps have different application programming interfaces and different functions, and wherein the step (12) of determining at least one electronic map matching with the electronic map filtering information from the plurality of preset electronic maps comprises:
judging (23, 32) whether the current geographic location information is identical to pre-stored geographic location information, the pre-stored geographic location information being geographic location information previously obtained when using the electronic map function;
when judging that the current geographic location information is different from the stored geographic location information, determining (24, 33) at least one electronic map corresponding to the current geographic location information according to a preset corresponding relationship between geographic location information and electronic maps;
when judging that the current geographic location information is identical to the stored geographic location information, determining (25, 34) an electronic map previously determined with respect to the stored geographic location information as the electronic map matching with the current geographic location information and as the selected electronic map,
when a plurality of electronic maps are determined to match with the electronic map filtering information, the method further comprises:
obtaining (36) a user's requirement information, wherein the requirement information includes self-drive route inquiring, bus route inquiring, traffic condition inquiring, GPS coordinate inquiring, or satellite picture inquiring;
determining (36) an electronic map function corresponding to the requirement information according to the requirement information; and
determining as the selected electronic map an electronic map having the electronic map function corresponding to the requirement information from the more than one determined electronic maps according to respective electronic map functions of the determined electronic maps,
loading and displaying the selected electronic map.

2. The method according to claim 1, **characterized in that**, the electronic map filtering information is geographic location information, and
the step (11, 22) of obtaining the electronic map filtering information comprises:
obtaining the geographic location information from an IP address; or
obtaining the geographic location information from a GPS positioning; or
obtaining the geographic location information from a GPRS positioning; or
obtaining the geographic location information through a geographic location application program interface embedded in a browser.

3. The method according to claim 1 or 2, **characterized in that**, after determining the electronic map matching with the electronic map filtering information, the method further comprises:
displaying (26, 38) marks of the determined electronic maps;
receiving (27, 39) a selection instruction inputted by the user with regard to the marks; and
loading and displaying (28, 39) an electronic map represented by a mark corresponding to the selection instruction according to the selection instruction.

4. A device for determining an electronic map, comprising:
an electronic map filtering information obtaining unit (41) configured to obtain electronic map filtering information after receiving an electronic map start instruction inputted by a user, wherein the electronic map filtering information is current geographic location information; and
a first electronic map determining unit (42) configured to determine at least one electronic map matching with the electronic map filtering information from a plurality of preset electronic maps, wherein the plurality of preset electronic maps have different application programming interfaces and different functions, and wherein the first electronic map determining unit (42) comprises:
a judging module (421) configured to judge whether the current geographic location information is identical to pre-stored geographic location information, the pre-stored geographic location information being geographic location information previously obtained when using the electronic map function;
a first determining module (422) configured to determine an electronic map corresponding to the current geographic location information according to a preset corresponding relationship between geographic location information and electronic maps when the judging module judges that the current geographic location information is different from the stored geographic location information; and
a second determining module (423) configured to determine an electronic map previously determined with respect to the stored geographic location information as an electronic map matching with the current geographic location information when the judging module judges that the current geographic location information is identical to the stored geographic location information,
wherein when there is more than one electronic map being determined to match with the electronic map filtering information by the first electronic map determining unit (42), the device further comprises:
a requirement information obtaining unit (43) configured to obtain a user's requirement information, wherein the requirement information includes self-drive route inquiring, bus route inquiring, traffic condition inquiring, GPS coordinate inquiring, or satellite picture inquiring;
an electronic map function determining unit (44) configured to determine an electronic map function corresponding to the requirement information according to the requirement information obtained by the requirement information obtaining unit; and
a second electronic map determining unit (45) configured to determine as the selected electronic map an electronic map having the function corresponding to the requirement information from the more than one determined electronic maps according to respective electronic map functions of the determined electronic maps,
wherein the requirement information includes self-drive route inquiring, bus route inquiring, traffic condition inquiring, GPS coordinate inquiring, or satellite picture inquiring,
a second electronic map displaying unit (49) configured to load and display the electronic map.

5. The device according to claim 4, **characterized in that**, the electronic map filtering information obtained by the electronic map filtering information obtain unit (41) is geographic location information, and
the electronic map filtering information obtain unit (41) comprises:
a first obtaining module (411) configured to obtain the geographic location information from an IP address; or
a second obtaining module (412) configured to obtain the geographic location information from a GPS positioning; or
a third obtaining module (413) configured to obtain the geographic location information from a GPRS positioning; or
a fourth obtaining module (414) configured to obtain the geographic location information through a geographic location application program interface embedded in a browser.

6. The device according to claim 4 or 5, **characterized in that**, the device further comprises:
a mark displaying unit (46) configured to display marks of the electronic maps determined by the first electronic map determining unit;
a selection instruction receiving unit (47) configured to receive a selection instruction inputted by the user with regard to the mark displayed by the mark displaying unit; and
a first electronic map displaying unit (48) configured to load and display an electronic map represented by a mark corresponding to the selection instruction according to the selection instruction received by the selection instruction receiving unit.

7. A computer program product stored on a computer usable medium, comprising computer-readable program means for causing a device to implement the method according to any one of claims 1 to 3.

## Patentansprüche

1. Verfahren zum Bestimmen einer elektronischen Karte, das von einem Endgerät mit elektronischen Kartenfunktionen ausgeführt wird, wobei das Verfahren umfasst:
Erhalten (11, 22, 32) von Informationen zur Filterung elektronischer Karten nach Empfangen (21, 31) einer von einem Benutzer eingegebenen Anweisung zum Starten einer elektronischen Karte, wobei die Informationen zur Filterung elektronischer Karten aktuelle Informationen zum geografischen Standort sind, und
Bestimmen (12) mindestens einer elektronischen Karte, die mit den Informationen zur Filterung elektronischer Karten übereinstimmt, aus mehreren voreingestellten elektronischen Karten, wobei die mehreren voreingestellten elektronischen Karten verschiedene Anwendungsprogrammierschnittstellen und verschiedene Funktionen aufweisen, und wobei der Schritt (12) des Bestimmens mindestens einer elektronischen Karte, die mit den Informationen zur Filterung elektronischer Karten übereinstimmt, aus den mehreren voreingestellten elektronischen Karten umfasst:
Beurteilen (23, 32), ob die aktuellen Informationen zum geografischen Standort mit den vorgespeicherten Informationen zum geografischen Standort identisch sind, wobei die vorgespeicherten Informationen zum geografischen Standort Informationen zum geografischen Standort sind, die zuvor unter Verwendung der elektronischen Kartenfunktion erhalten wurden,
wenn beurteilt wird, dass sich die aktuellen Informationen zum geografischen Standort von den gespeicherten Informationen zum geografischen Standort unterscheiden, Bestimmen (24, 33) mindestens einer elektronischen Karte, die den aktuellen Informationen zum geografischen Standort entspricht, gemäß einer voreingestellten entsprechenden Beziehung zwischen Informationen zum geografischen Standort und elektronischen Karten,
wenn beurteilt wird, dass die aktuellen Informationen zum geografischen Standort mit den gespeicherten Informationen zum geografischen Standort identisch sind, Bestimmen (25, 34) einer elektronischen Karte, die zuvor in Bezug auf die gespeicherten Informationen zum geografischen Standort bestimmt wurde, als die elektronische Karte, die mit den aktuellen Informationen zum geografischen Standort übereinstimmt, und als die ausgewählte elektronische Karte,
wenn bestimmt wird, dass mehrere elektronische Karten mit den Informationen zur Filterung elektronischer Karten übereinstimmen, umfasst das Verfahren ferner:
Erhalten (36) von Anforderungsinformationen eines Benutzers, wobei die Anforderungsinformationen ein Abfragen von Selbstfahrrouten, ein Abfragen von Busrouten, ein Abfragen von Verkehrsbedingungen, ein Abfragen von GPS-Koordinaten oder ein Abfragen von Satellitenbildern beinhalten,
Bestimmen (36) einer elektronischen Kartenfunktion, die den Anforderungsinformationen entspricht, gemäß den Anforderungsinformationen, und
Bestimmen einer elektronischen Karte, welche die elektronische Kartenfunktion aufweist, die den Anforderungsinformationen aus den mehr als einer bestimmten elektronischen Karten entspricht, gemäß den jeweiligen elektronischen Kartenfunktionen der bestimmten elektronischen Karten als die ausgewählte elektronische Karte,
Laden und Anzeigen der ausgewählten elektronischen Karte.

2. Verfahren nach Anspruch 1, **dadurch gekennzeichnet, dass** die Informationen zur Filterung elektronischer Karten Informationen zum geografischen Standort sind, und
der Schritt (11, 22) des Erhaltens von Informationen zur Filterung elektronischer Karten umfasst:
Erhalten der Informationen zum geografischen Standort von einer IP-Adresse, oder
Erhalten der Informationen zum geografischen Standort von einer GPS-Positionierung, oder
Erhalten der Informationen zum geografischen Standort von einer GPRS-Positionierung, oder
Erhalten der Informationen zum geografischen Standort über eine in einen Browser eingebettete Anwendungsprogrammschnittstelle für geografische Standorte.

3. Verfahren nach Anspruch 1 oder 2, **dadurch gekennzeichnet, dass** nach einem Bestimmen des Übereinstimmens der elektronischen Karte mit den Informationen zur Filterung elektronischer Karten das Verfahren ferner umfasst:
Anzeigen (26, 38) von Markierungen der bestimmten elektronischen Karten,
Empfangen (27, 39) einer von dem Benutzer in Bezug auf die Markierungen eingegeben Auswahlanweisung, und
Laden und Anzeigen (28, 39) einer elektronischen Karte, die durch eine Markierung dargestellt ist, die der Auswahlanweisung entspricht, gemäß der Auswahlanweisung.

4. Vorrichtung zum Bestimmen einer elektronischen Karte, umfassend:
eine Erhaltungseinheit (41) von Informationen zur Filterung elektronischer Karten, die dazu ausgestaltet ist, Informationen zur Filterung elektronischer Karten nach Empfang einer von einem Benutzer eingegebenen Anweisung zum Starten elektronischer Karten zu erhalten, wobei die Informationen zur Filterung elektronischer Karten aktuelle Informationen zum geografischen Standort sind, und
eine erste Bestimmungseinheit (42) für elektronische Karten, die dazu ausgestaltet ist, mindestens ein Übereinstimmen von elektronischen Karten mit den Informationen zur Filterung elektronischer Karten aus mehreren voreingestellten elektronischen Karten zu bestimmen, wobei die mehreren voreingestellten elektronischen Karten verschiedene Anwendungsprogrammierschnittstellen und verschiedene Funktionen aufweisen, und wobei die erste Bestimmungseinheit (42) für elektronische Karten umfasst:
ein Beurteilungsmodul (421), das dazu ausgestaltet ist, zu beurteilen, ob die aktuellen Informationen zum geografischen Standort mit vorgespeicherten Informationen zum geografischen Standort identisch sind, wobei die vorgespeicherten Informationen zum geografischen Standort Informationen zum geografischen Standort sind, die zuvor unter Verwendung der elektronischen Kartenfunktion erhalten wurden,
ein erstes Bestimmungsmodul (422), das dazu ausgestaltet ist, eine elektronische Karte, die den aktuellen Informationen zum geografischen Standort entspricht, gemäß einer voreingestellten entsprechenden Beziehung zwischen Informationen zum geografischen Standort und elektronischen Karten zu bestimmen, wenn das Beurteilungsmodul beurteilt, dass sich die aktuellen Informationen zum geografischen Standort von den gespeicherten Informationen zum geografischen Standort unterscheiden, und
ein zweites Bestimmungsmodul (423), das dazu ausgestaltet ist, eine elektronische Karte zu bestimmen, die zuvor in Bezug auf die gespeicherten Informationen zum geografischen Standort als eine elektronische Karte bestimmt wurde, die mit den aktuellen Informationen zum geografischen Standort übereinstimmt, wenn das Beurteilungsmodul beurteilt, dass die aktuellen Informationen zum geografischen Standort mit den gespeicherten Informationen zum geografischen Standort identisch sind,
wobei, wenn durch die erste Bestimmungseinheit (42) für elektronische Karten bestimmt wird, dass mehr als eine elektronische Karte mit den Informationen zur Filterung elektronischer Karten übereinstimmt, die Vorrichtung ferner umfasst:
eine Erhaltungseinheit (43) von Anforderungsinformationen, die dazu ausgestaltet ist, die Anforderungsinformationen eines Benutzers zu erhalten, wobei die Anforderungsinformationen ein Abfragen von Selbstfahrrouten, ein Abfragen von Busrouten, ein Abfragen von Verkehrsbedingungen, ein Abfragen von GPS-Koordinaten oder ein Abfragen von Satellitenbildern beinhalten,
eine Bestimmungseinheit (44) für elektronische Kartenfunktionen, die dazu ausgestaltet ist, eine elektronische Kartenfunktion zu bestimmen, die den Anforderungsinformationen entspricht, gemäß den Anforderungsinformationen, die durch die Erhaltungseinheit von Anforderungsinformationen erhalten wird, und
eine zweite Bestimmungseinheit (45) für elektronische Karten, die dazu ausgestaltet ist, eine elektronische Karte, welche die Funktion aufweist, die den Anforderungsinformationen entspricht, aus den mehr als einer bestimmten elektronischen Karten gemäß den jeweiligen elektronischen Kartenfunktionen der bestimmten elektronischen Karten als die ausgewählte elektronische Karte zu bestimmen,
wobei die Anforderungsinformationen ein Abfragen von Selbstfahrrouten, ein Abfragen von Busrouten, ein Abfragen von Verkehrsbedingungen, ein Abfragen von GPS-Koordinaten oder ein Abfragen von Satellitenbildern beinhalten,
eine zweite Anzeigeeinheit (49) für elektronische Karten, die dazu ausgestaltet ist, die elektronische Karte zu laden und anzuzeigen.

5. Vorrichtung nach Anspruch 4, **dadurch gekennzeichnet, dass** die Informationen zur Filterung elektronischer Karten, die von der Erhaltungseinheit (41) von Informationen zur Filterung elektronischer Karten erhalten werden, Informationen zum geografischen Standort sind, und
die Erhaltungseinheit (41) von Informationen zur Filterung elektronischer Karten umfasst:
ein erstes Erhaltungsmodul (411), das dazu ausgestaltet ist, die Informationen zum geografischen Standort von einer IP-Adresse zu erhalten, oder
ein zweites Erhaltungsmodul (412), das dazu ausgestaltet ist, die Informationen zum geografischen Standort von einer GPS-Positionierung zu erhalten, oder
ein drittes Erhaltungsmodul (413), das dazu ausgestaltet ist, die Informationen zum geografischen Standort von einer GPRS-Positionierung zu erhalten, oder
ein viertes Erhaltungsmodul (414), das dazu ausgestaltet ist, die Informationen zum geografischen Standort über eine in einen Browser eingebettete Anwendungsprogrammschnittstelle für geografische Standorte zu erhalten.

6. Vorrichtung nach Anspruch 4 oder 5, **dadurch gekennzeichnet, dass** die Vorrichtung ferner umfasst:
eine Markierungsanzeigeeinheit (46), die dazu ausgestaltet ist, Markierungen der elektronischen Karten anzuzeigen, die von der ersten Bestimmungseinheit für elektronische Karten bestimmt wurden,
eine Empfangseinheit (47) von Auswahlanweisungen, die dazu ausgestaltet ist, eine vom Benutzer eingegebene Auswahlanweisung in Bezug auf die von der Markierungsanzeigeeinheit angezeigte Markierung zu empfangen, und
eine erste Anzeigeeinheit (48) für elektronische Karten, die dazu ausgestaltet ist, eine elektronische Karte, die durch eine Markierung entsprechend der Auswahlanweisung gemäß der von der Empfangseinheit von Auswahlanweisungen empfangenen Auswahlanweisung dargestellt wird, zu laden und anzuzeigen.

7. Computerprogrammprodukt, das auf einem computernutzbaren Medium gespeichert ist, umfassend computerlesbare Programmmittel, um eine Vorrichtung zu veranlassen, das Verfahren nach einem der Ansprüche 1 bis 3 zu implementieren.

## Revendications

1. Procédé permettant de déterminer une carte électronique, exécuté par un terminal doté de fonctions de carte électronique, le procédé comprenant les étapes suivantes :
obtenir (11, 22, 32) des informations de filtrage de cartes électroniques après avoir reçu (21, 31) une instruction de démarrage de carte électronique, introduite par un utilisateur, dans lequel les informations de filtrage de cartes électroniques sont des informations de localisation géographique actuelles ; et
déterminer (12) au moins une carte électronique concordant avec les informations de filtrage de cartes électroniques, à partir d'une pluralité de cartes électroniques préétablies, dans lequel la pluralité de cartes électroniques préétablies a différentes interfaces de programmation d'application et différentes fonctions, et dans lequel l'étape (12) consistant à déterminer au moins une carte électronique concordant avec les informations de filtrage de cartes électroniques à partir de la pluralité de cartes électroniques préétablies comprend les étapes suivantes :
évaluer (23, 32) si les informations de localisation géographique actuelles sont identiques à des informations de localisation géographique préalablement stockées, les informations de localisation géographique préalablement stockées étant des informations de localisation géographique précédemment obtenues lors de l'utilisation de la fonction de carte électronique ;
lorsqu'il est évalué que les informations de localisation géographique actuelles sont différentes des informations de localisation géographique stockées, déterminer (24, 33) au moins une carte électronique correspondant aux informations de localisation géographique actuelles, en fonction d'une relation préétablie correspondante entre des informations de localisation géographique et des cartes électroniques ;
lorsqu'il est évalué que les informations de localisation géographique actuelles sont identiques aux informations de localisation géographique stockées, déterminer (25, 34) une carte électronique précédemment déterminée par rapport aux informations de localisation géographique stockées, en tant que carte électronique concordant avec les informations de localisation géographique actuelles et en tant que carte électronique sélectionnée,
lorsqu'il est déterminé qu'une pluralité de cartes électroniques concorde avec les informations de filtrage de cartes électroniques, le procédé comprend en outre les étapes suivantes :
obtenir (36) des informations sur les exigences de l'utilisateur, dans lequel les informations sur les exigences incluent la consultation des itinéraires de conduite autonome, la consultation des itinéraires d'autobus, la consultation des conditions de circulation, la consultation des coordonnées GPS ou la consultation des images satellitaires;
déterminer (36) une fonction de carte électronique correspondant aux informations sur les exigences, conformément aux informations sur les exigences ; et
déterminer en tant que carte électronique sélectionnée, une carte électronique possédant la fonction de carte électronique correspondant aux informations sur les exigences, à partir de la pluralité de cartes électroniques déterminées, conformément à des fonctions respectives de cartes électroniques des cartes électroniques déterminées,
charger et afficher la carte électronique sélectionnée.

2. Procédé selon la revendication 1, **caractérisé en ce que** les informations de filtrage de cartes électroniques sont des informations de localisation géographique, et
l'étape (11, 22) consistant à obtenir les informations de filtrage de cartes électroniques comprend les étapes suivantes :
obtenir les informations de localisation géographique à partir d'une adresse IP ; ou
obtenir les informations de localisation géographique à partir d'un positionnement GPS ; ou
obtenir les informations de localisation géographique à partir d'un positionnement GPRS ; ou
obtenir les informations de localisation géographique par le biais d'une interface de programme d'application de localisation géographique, intégrée dans un navigateur.

3. Procédé selon la revendication 1 ou 2, **caractérisé en ce que**, après la détermination de la carte électronique concordant avec les informations de filtrage de cartes électroniques, le procédé comprend en outre les étapes suivantes :
afficher (26, 38) des marques des cartes électroniques déterminées ;
recevoir (27, 39) une instruction de sélection introduite par l'utilisateur par rapport aux marques ; et
charger et afficher (28, 39) une carte électronique représentée par une marque correspondant à l'instruction de sélection, conformément à l'instruction de sélection.

4. Dispositif permettant de déterminer une carte électronique, comprenant :
une unité d'obtention d'informations de filtrage de cartes électroniques (41) conçue pour obtenir des informations de filtrage de cartes électroniques après avoir reçu une instruction de démarrage de carte électronique, introduite par un utilisateur, dans lequel les informations de filtrage de cartes électroniques sont des informations de localisation géographique actuelles ; et
une première unité de détermination de carte électronique (42) conçue pour déterminer au moins une carte électronique concordant avec les informations de filtrage de cartes électroniques, à partir d'une pluralité de cartes électroniques préétablies, dans lequel la pluralité de cartes électroniques préétablies a différentes interfaces de programmation d'application et différentes fonctions, et dans lequel la première unité de détermination de carte électronique (42) comprend :
un module d'évaluation (421) conçu pour évaluer si les informations de localisation géographique actuelles sont identiques à des informations de localisation géographique préalablement stockées, les informations de localisation géographique préalablement stockées étant des informations de localisation géographique précédemment obtenues lors de l'utilisation de la fonction de carte électronique ;
un premier module de détermination (422) conçu pour déterminer une carte électronique correspondant aux informations de localisation géographique actuelles, en fonction d'une relation préétablie correspondante entre des informations de localisation géographique et des cartes électroniques, lorsque le module d'évaluation évalue que les informations de localisation géographique actuelles sont différentes des informations de localisation géographique stockées ; et
un second module de détermination (423) conçu pour déterminer une carte électronique précédemment déterminée par rapport aux informations de localisation géographique stockées, en tant que carte électronique concordant avec les informations de localisation géographique actuelles, lorsque le module d'évaluation évalue que les informations de localisation géographique actuelles sont identiques aux informations de localisation géographique stockées,
dans lequel lorsqu'il est déterminé que plusieurs cartes électroniques concordent avec les informations de filtrage de cartes électroniques, par la première unité de détermination de carte électronique (42), le dispositif comprend en outre :
une unité d'obtention d'informations sur des exigences (43) conçue pour obtenir des informations sur les exigences de l'utilisateur, dans lequel les informations sur les exigences incluent la consultation des itinéraires de conduite autonome, la consultation des itinéraires d'autobus, la consultation des conditions de circulation, la consultation des coordonnées GPS ou la consultation des images satellitaires ;
une unité de détermination de fonction de carte électronique (44) conçue pour déterminer une fonction de carte électronique correspondant aux informations sur les exigences, conformément aux informations sur les exigences obtenues par l'unité d'obtention d'informations sur des exigences ; et
une seconde unité détermination de carte électronique (45) conçue pour déterminer en tant que carte électronique sélectionnée, une carte électronique possédant la fonction correspondant aux informations sur les exigences, à partir de la pluralité de cartes électroniques déterminées, conformément à des fonctions respectives de cartes électroniques des cartes électroniques déterminées,
dans lequel les informations sur les exigences incluent la consultation des itinéraires de conduite autonome, la consultation des itinéraires d'autobus, la consultation des conditions de circulation, la consultation des coordonnées GPS ou la consultation des images satellitaires,
une seconde unité d'affichage de carte électronique (49) conçue pour charger et afficher la carte électronique.

5. Dispositif selon la revendication 4, **caractérisé en ce que** les informations de filtrage de cartes électroniques obtenues par l'unité d'obtention d'informations de filtrage de cartes électroniques (41) sont des informations de localisation géographique, et
l'unité d'obtention d'informations de filtrage de cartes électroniques (41) comprend :
un premier module d'obtention (411) conçu pour obtenir les informations de localisation géographique à partir d'une adresse IP ; ou
un deuxième module d'obtention (412) conçu pour obtenir les informations de localisation géographique à partir d'un positionnement GPS ; ou
un troisième module d'obtention (413) conçu pour obtenir les informations de localisation géographique à partir d'un positionnement GPRS ; ou
un quatrième module d'obtention (414) conçu pour obtenir les informations de localisation géographique par le biais d'une interface de programme d'application de localisation géographique, intégrée dans un navigateur.

6. Dispositif selon la revendication 4 ou 5, **caractérisé en ce que** le dispositif comprend en outre :
une unité d'affichage de marques (46) conçue pour afficher des marques des cartes électroniques déterminées par la première unité de détermination de carte électronique ;
une unité de réception d'instruction de sélection (47) conçue pour recevoir une instruction de sélection introduite par l'utilisateur par rapport à la marque affichée par l'unité d'affichage de marques ; et
une première unité d'affichage de carte électronique (48) conçue pour charger et afficher une carte électronique représentée par une marque correspondant à l'instruction de sélection, conformément à l'instruction de sélection reçue par l'unité de réception d'instruction de sélection.

7. Produit-programme informatique stocké sur un support utilisable par un ordinateur, comprenant des moyens de programme lisibles par ordinateur, destinés à amener un dispositif à mettre en œuvre le procédé selon l'une quelconque des revendications 1 à 3.
